# EUROPEAN PATENT APPLICATION

(11) **EP 3 878 537 A1**
(43) Date of publication of application: **15.09.2021**
(21) Application number: 19882185.2
(22) Date of filing: 08.11.2019
(51) Int. Cl.: B01D 35/02, B01D 39/16, F16H 57/04

(54) **FILTER MATERIAL FOR AUTOMATIC TRANSMISSION OIL FILTER**

(30) Priority: 09.11.2018 JP 2018211289
(71) Applicant: Roki Co., Ltd., Hamamatsu-shi, Shizuoka 431-3314 (JP)
(72) Inventor: HIO, Yosuke, Tenryu-ku, Hamamatsu-shi, Shizuoka 4313314 (JP)
(74) Representative: Cohausz & Florack
(86) International application number: PCT/JP2019/043808
(87) International publication number: WO 2020/096030

(57) **Abstract**

Provided is a filter material for an automatic transmission oil filter that has excellent filtration performance and that can trap even dust having a small particle size. The filter material comprises an entangled nonwoven fabric in which fine fibers generated from dividable composite fibers are entangled with each other.

## Description

### TECHNICAL FIELD

The present invention relates to a filter material for an automatic transmission oil filter.

### BACKGROUND ART

Due to the recent increase in the number of stages and the progress of miniaturization of automatic transmissions aimed at reducing fuel consumption of automobiles, since the clearance between the valves of the fluid flow path in the transmission is small, if dust with a smaller particle size than before cannot be trapped, there is a problem that the valve is clogged and it causes a shift failure, and in order to solve this problem, filter materials are required to have filtration performance to capture dust with a small particle size.

Although the applicant of the present application has proposed a filter material for an automatic transmission oil filter (Patent literature 1), a needle-punched nonwoven fabric obtained by needle punching on a dry-laid web was preferably used, and it was not possible to efficiently trap dust with a small particle size.

### CITATION LIST

### PATENT LITERATURE

[Patent literature 1] JP 2003-33613 A

### SUMMARY OF INVENTION

### TECHNICAL PROBLEM

Under these circumstances, an object of the present invention is to provide a filter material for an automatic transmission oil filter that has excellent filtration performance and that can trap even dust having a small particle size.

### SOLUTION TO PROBLEM

The present invention is [1] a filter material for an automatic transmission oil filter, said filter material comprising an entangled nonwoven fabric in which fine fibers generated from dividable composite fibers are entangled with each other.

The present invention is preferably [2] the filter material for an automatic transmission oil filter of [1], wherein the entangled nonwoven fabric comprises fine fibers having a fineness of 0.4 dtex or less, and air permeability is 30 mL/cm²/sec. or more.

### ADVANTAGEOUS EFFECTS OF INVENTION

The filter material of the present invention has excellent filtration performance capable of capturing even dust having a small particle size, since the filter material comprises an entangled nonwoven fabric in which fine fibers generated from dividable composite fibers, and contains the fine fibers, and as a result, not only is the fiber surface area large, but micro spaces are formed by the entanglement of the fine fibers.

The filter material of the present invention has excellent filtration performance, since the filter material contains the fine fibers, and as a result, the fiber surface area is large, and since micro spaces are formed by the entanglement of the fine fibers. Further, it is preferably a filter material with low pressure loss, since it has spaces having an air permeability of 30 mL/cm²/sec. or more.

### DESCRIPTION OF EMBODIMENTS

### (1) Composite fibers that can be divided;

Composite fibers that can be divided (hereinafter sometimes referred to as "dividable composite fibers") are fibers that generate fine fibers by division. For example, (i) fibers in which resins with low compatibility are arranged in an orange or multi-layered shape in the cross section; (ii) fibers containing a resin that dissolves in a certain solvent, and a resin that does not dissolve in the solvent or has a slower dissolution rate than the resin; (iii) fibers containing resins with different degrees of swelling in a certain solvent; and the like; may be exemplified. In the case of the dividable composite fibers of (i), fine fibers can be generated by dividing them using a fluid flow such as a water jet or the like, or by physical action such as needles, a calender, a flat press, or the like. In the case of the dividable composite fibers of (ii), fine fibers can be generated by chemical action of dissolving and removing the resin with a certain solvent. In the case of the dividable composite fibers of (iii), fine fibers can be generated by chemical action that utilizes the difference in the degree of swelling when exposed to a certain solvent. Among them, the dividable composite fibers of (i) are preferable, because wide fiber surfaces can be obtained by generating fine fibers, and at the same time, the generated fine fibers can be entangled to form micro spaces, and an entangled nonwoven fabric that easily captures dust with a small particle size can be obtained. Further, in the case of the dividable composite fibers of (i), since dust with a small particle size can be trapped even by the micro spaces inside the entangled nonwoven fabric formed by the generation of fine fibers, the amount of dust trapped can be increased. In particular, dividable composite fibers in which resins are arranged in an orange shape in the cross section is preferable, because fine fibers with uniform fineness can be generated, and variation in collection performance is unlikely to occur. In connection with this, even in the case of the dividable composite fibers of (ii) or (iii), an entangled nonwoven fabric in which fine fibers are entangled to each other can be obtained by applying physical action such as a water jet or the like after generating fine fibers. When the preferred dividable composite fibers of (i) are composed of two types of resins, for example, combinations of polyamide and polyester, polyamide and polyolefin, polyester and polyolefin, and the like may be exemplified. The fineness and fiber length of the dividable composite fibers are not particularly limited, as long as they can be divided into fine fibers.

### (2) Fine fibers;

The fineness of the fine fibers generated from the dividable composite fibers contained in the entangled nonwoven fabric used in the filter material of the present invention is preferably 0.4 dtex or less, more preferably 0.3 dtex or less, and still more preferably 0.2 dtex or less. When the filter material is made of an entangled nonwoven fabric containing fine fibers of such fineness, the fiber surface area is large, and micro spaces are formed between the fine fibers or between the fine fibers and other fibers, and since dust can be trapped inside the entangled nonwoven fabric, the filter material has excellent filtration performance.

Further, the fineness of the fine fibers is preferably 0.01 dtex or more, since it has excellent fiber strength and does not generate dust from the fine fibers themselves.

The fiber length of the fine fibers is preferably 25 to 102 mm, more preferably 38 to 76 mm, and still more preferably 38 to 51 mm, so that the fine fibers do not drop and are uniformly dispersed in the filter material. Each lower limit and each upper limit can be arbitrarily combined as desired.

The cross-sectional shape of the fine fibers is not particularly limited, but it may be, for example, circular, oval, elliptical, semicircular, polygonal (such as substantially triangular, substantially trapezoidal, or the like), or the like. The polygonal shape is preferable, since the fiber surface area becomes large, and it is excellent in dust collectability.

As the resin composition of the fine fibers, for example, polyamide-based resins (such as 6 nylon, 66 nylon, or the like), polyvinyl alcohol resin, polyvinylidene chloride-based resins, polyvinyl chloride-based resins, polyester-based resins (such as polyethylene terephthalate, polybutylene terephthalate, or the like), polyacrylonitrile-based resins, polyolefin-based resins (such as polyethylene, polypropylene, or the like), polyurethane-based resins, or the like, may be exemplified. It is preferable that the polyester-based resins or the polyamide-based resins with high softening temperature and excellent heat resistance are contained so that it has excellent long-term durability in high-temperature oil.

The dividable composite fibers do not need to be completely divided. For example, fine fibers may be generated by dividing only a part of the individual dividable composite fibers, or only a part of the dividable composite fibers in the entangled nonwoven fabric. Further, one end of the fine fibers may be bonded to the dividable composite fibers. Furthermore, the fine fibers may be aggregated and do not have to be dispersed.

The proportion of the fine fibers contained in the entangled nonwoven fabric used in the filter material of the present invention varies depending on the particle size of the target dust, and is not particularly limited. The fine fibers may be contained so that the pore size of the filter material is preferably 45 µm or less, more preferably 40 µm or less, still more preferably 35 µm or less, still more preferably 33 µm or less, still more preferably 31 µm or less, still more preferably 29 µm or less, still more preferably 27 µm or less, and still more preferably 25 µm or less. Further, in order to prevent an increase in pressure loss of the filter material, the fine fibers may be contained so that the air permeability of the filter material is preferably 30 mL/cm²/sec. or more, more preferably 35 mL/cm²/sec. or more, still more preferably 37 mL/cm²/sec. or more, and still more preferably 39 mL/cm²/sec. or more.

### (3) Thick fibers;

If the entangled nonwoven fabric used in the filter material of the present invention is composed of only fine fibers, the entangled nonwoven fabric structure tends to be too dense and the pressure loss tends to increase. It is preferable that thick fibers having a fineness of 6.6 dtex or more is contained in addition to the fine fibers so that, by increasing the thickness of the filter material, dust can be trapped even inside the entangled nonwoven fabric, and the filtration life can be extended.

The upper limit of the fineness of the thick fibers is not particularly limited, but it is preferably 17 dtex or less so that it has excellent filtration performance.

The fiber length of the thick fibers is not particularly limited, but it is preferably 25 to 127 mm, more preferably 38 to 102 mm, and still more preferably 51 to 76 mm, so that the thick fibers do not drop and are uniformly dispersed in the filter material. Each lower limit and each upper limit can be arbitrarily combined as desired.

The cross-sectional shape of the thick fibers is not particularly limited, but it may be, for example, circular, oval, elliptical, semicircular, polygonal (such as substantially triangular, substantially trapezoidal, or the like), or the like.

The resin composition of the thick fibers is the same as that of the fine fibers described above. In particular, the polyester-based resins or the polyamide-based resins with high softening temperature and excellent heat resistance are preferable.

For the proportion of the thick fibers that can be contained in the entangled nonwoven fabric used in the filter material of the present invention, the thick fibers may be contained so that the air permeability of the filter material is preferably 30 mL/cm²/sec. or more. The content of the thick fibers is preferably 10 to 90 mass% of the entangled nonwoven fabric constituent fibers, more preferably 20 to 80 mass%, and still more preferably 30 to 70 mass%. Each lower limit and each upper limit can be arbitrarily combined as desired.

### (4) Medium fibers;

In order to reduce the local variation in mass per unit area of fibers and easily satisfy both filtration performance and low-pressure loss at the same time, it is preferable that the entangled nonwoven fabric used in the filter material of the present invention contains medium fibers having a fineness more than 0.4 dtex and less than 6.6 dtex in addition to the fine fibers. The entangled nonwoven fabric may contain preferably medium fibers having a fineness of 0.6 to 6 dtex, more preferably medium fibers having a fineness of 0.8 to 5 dtex, and still more preferably medium fibers having a fineness of 1 to 4 dtex. Each lower limit and each upper limit can be arbitrarily combined as desired.

When the entangled nonwoven fabric contains the medium fibers and the thick fibers in addition to the fine fibers, the average fineness of fibers other than the fine fibers is preferably 0.5 to 6 dtex, more preferably 0.8 to 5 dtex, and still more preferably 1 to 4 dtex, in order to easily satisfy both filtration performance and low-pressure loss at the same time. Each lower limit and each upper limit can be arbitrarily combined as desired.

The fiber length of the medium fibers is not particularly limited, but is preferably 25 to 102 mm, more preferably 38 to 76 mm, and still more preferably 38 to 51 mm, so that the medium fibers do not drop and are uniformly dispersed in the filter material. Each lower limit and each upper limit can be arbitrarily combined as desired.

The cross-sectional shape of the medium fibers is not particularly limited, but it may be, for example, circular, oval, elliptical, semicircular, polygonal (such as substantially triangular, substantially trapezoidal, or the like), or the like.

The resin composition of the medium fibers is the same as that of the fine fibers described above. In particular, the polyester-based resins or the polyamide-based resins with high softening temperature and excellent heat resistance are preferable.

In order to easily satisfy both filtration performance and low-pressure loss at the same time, the content of the medium fibers that can be contained in the entangled nonwoven fabric used in the filter material of the present invention is preferably 5 to 80 mass% of the entangled nonwoven fabric constituent fibers, more particularly 10 to 70 mass%, and still more particularly 20 to 60 mass%. Each lower limit and each upper limit can be arbitrarily combined as desired.

### (5) Entangled nonwoven fabric (filter material);

The entangled nonwoven fabric used in the filter material of the present invention is a nonwoven fabric obtained by entangling (for example, hydroentanglement, needle punching), and may be an entangled nonwoven fabric in which fibers are fixed to each other by fusing the fibers and/or bonding with a binder, in addition to entangling. In particular, an entangled nonwoven fabric in which, by applying a water jet to the dividable composite fibers, the dividable composite fibers are divided to generate fine fibers, and the fine fibers are entangled to each other at the same time, is preferable. Since the filter material is such an entangled nonwoven fabric, the fibers are easily oriented in the thickness direction, dust can be trapped even inside the entangled nonwoven fabric, and the amount of dust trapped increases.

The fiber web can be formed by a dry method or a wet method. Since fine fibers or the like having a certain length are preferable so that the fibers do not drop, it is preferable to form the fiber web by a dry method.

The entangled nonwoven fabric preferably contain fibers that are cross-aligned with respect to the longitudinal direction so that the strength in each direction is uniform.

When the filter material is used in a folded form in order to increase the filtration area, an entangled nonwoven fabric (filter material) that has been bonded with a binder to increase its rigidity is preferable so that it has excellent fold workability and that it retains the fold shape and does not adhere to adjacent folds.

Such a binder is not particularly limited as long as the rigidity of the entangled nonwoven fabric (filter material) can be increased, but it is preferably bonded by at least one binder selected from rubber-based binders, thermosetting binders, and thermoplastic binders. More particularly, as the rubber-based binders, for example, styrene-butadiene rubber (SBR), butadiene rubber (BR), isoprene rubber (IR), nitrile-butadiene rubber (NBR), chloroprene rubber, butyl rubber (IIR), urethane rubber, silicone rubber, fluororubber, and the like, may be exemplified. As the thermosetting binders, for example, phenol resin, acrylic resin with a cross-linking agent, epoxy resin, xylene resin, urea resin, melamine resin, polyimide, and the like, may be exemplified. As the thermoplastic binders, for example, ketone resin, norbornene resin, fluoroplastic, polyacetal, polyamide, polyamideimide, polyarylate, thermoplastic polyimide, polyetherimide, polyetheretherketone, polyethylene oxide, polyester, polyvinylidene chloride, polyvinyl chloride, polycarbonate, polyvinyl acetate, polystyrene, polysulfone, polyvinyl alcohol, and the like, may be exemplified.

The pore size of the entangled nonwoven fabric (filter material) is preferably 45 µm or less, more preferably 40 µm or less, still more preferably 35 µm or less, still more preferably 33 µm or less, still more preferably 31 µm or less, still more preferably 29 µm or less, still more preferably 27 µm or less, and still more preferably 25 µm or less so that it has excellent filtration performance. The lower limit of the pore size of the entangled nonwoven fabric (filter material) is not particularly limited, but is, for example, 12 µm or more so that dust can be easily trapped even inside the entangled nonwoven fabric (filter material).

The air permeability of the entangled nonwoven fabric (filter material) is preferably 30 mL/cm²/sec or more, more preferably 35 mL/cm²/sec or more, still more preferably 37 mL/cm²/sec or more, and still more preferably 39 mL/cm²/sec or more so that it is an entangled nonwoven fabric (filter material) with low pressure loss. The upper limit of the air permeability of the entangled nonwoven fabric (filter material) is not particularly limited, but is, for example, 90 mL/cm²/sec or less.

In order to easily satisfy both filtration performance and low-pressure loss at the same time, the amount of fibers (mass per unit area) in the entangled nonwoven fabric (filter material) is preferably 80 to 140 g/m², more preferably 90 to 130 g/m², and still more preferably 100 to 130 g/m². Each lower limit and each upper limit can be arbitrarily combined as desired.

It is preferable that the fibers are bonded to each other with a binder and the entangled nonwoven fabric (filter material) has high rigidity. The amount of binder (solid content) is not particularly limited, but is preferably 3 to 40 g/m², more preferably 5 to 30 g/m², and still more preferably 10 to 20 g/m². Each lower limit and each upper limit can be arbitrarily combined as desired.

The thickness of the entangled nonwoven fabric (filter material) is not particularly limited. Since when a flat filter material is installed in a filter, it is difficult to increase the filtration area, a thicker one is preferable. The thickness is preferably 0.5 to 4.0 mm, more preferably 0.8 to 3.0 mm, and still more preferably 1.0 to 2.5 mm. On the other hand, when a folded filter material is installed in a filter, it is preferable that it is thinner than a flat filter material. More particularly, the thickness is preferably 0.3 to 2.5 mm, more preferably 0.5 to 2.0 mm, and still more preferably 0.8 to 1.5 mm. Each lower limit and each upper limit can be arbitrarily combined as desired.

The filter material of the present invention may comprise other fiber sheets (for example, a nonwoven fabric, a woven fabric, a knitted fabric, and the like) in addition to the above-mentioned entangled nonwoven fabric. Since the fibers of the entangled non-woven fabric are oriented in the thickness direction, dust can be trapped even inside the entangled nonwoven fabric, and the amount of dust trapped increases. In particular, when the structure of the entangled nonwoven fabric is relatively rough, (1) such as when thick fibers and/or medium fibers are contained, or (2) such as when the entangled nonwoven fabric is derived from a dry-laid fiber web, since dust can be easily trapped even inside the entangled nonwoven fabric, and the amount of dust trapped increases, it does not need to contain other fiber sheets, and the filter material may be composed of only the entangled nonwoven fabric.

The filter material of the present invention may be formed into a desired form, such as a flat shape, a folded shape, or the like, and used.

### (6) Method of manufacturing filter material;

The filter material of the present invention is not limited to the following, but can be produced, for example, by the following procedure.

(i) Dividable composite fibers and, if desired, thick fibers and/or medium fibers are prepared.

(ii) Dividable composite fibers and, if desired, thick fibers and/or medium fibers are mixed and opened using an opening machine such as card machine to form a fiber web. When the fiber orientation of the fiber web is unidirectional, it is preferable to cross the fiber orientation with respect to the longitudinal direction of the fiber web. The dividable composite fibers may be contained preferably at 18 g/m² or more, more preferably 20 g/m² or more, and still more preferably 22 g/m² or more so as to have excellent filtration performance. The upper limit of the amount of dividable composite fibers is preferably, for example, 50 g/m² or less in order to satisfy excellent air permeability and low-pressure loss.

(iii) When, by applying a water jet to the fiber web, the dividable composite fibers are divided to generate fine fibers and entangle them to each other at the same time to prepare the entangled nonwoven fabric. When thick fibers and/or medium fibers are contained in the fiber web, the fine fibers are also entangled to thick fibers and/or medium fibers to prepare the entangled nonwoven fabric.

When the filter material needs rigidity, a binder resin is applied to the entangled nonwoven fabric, and rigidity is increased by the binder resin to prepare the filter material.

### EXAMPLES

The present invention now will be further illustrated by, but is by no means limited to, the following Examples.

### <<Example 1>>

### (1) Preparation of fibers

The following fibers were prepared respectively:
(a) dividable composite fibers having a fineness of 2.75 dtex and a fiber length of 51 mm, with an orange-shaped fiber cross section in which polyethylene terephthalate and nylon 6 were arranged alternately (polyethylene terephthalate fine fibers having a fineness of 0.17 dtex with a substantially triangular cross section, and nylon 6 fine fibers having a fineness of 0.17 dtex with a substantially triangular cross section could be generated.);
(b) polyester medium fibers having a fineness of 1.44 dtex and a fiber length of 38 mm made of polyethylene terephthalate; and
(c) polyester thick fibers having a fineness of 6.7 dtex and a fiber length of 76 mm made of polyethylene terephthalate.

### (2) Manufacture of filter materials

The prepared fibers were used and mixed with the composition shown in Table 1, and opened using a card machine to form unidirectional fiber webs, and the fiber webs were crossed so that the orientation direction of the fibers intersected the transport direction of the fiber webs to form cross-fiber webs respectively.

Next, each cross-fiber web was entangled by needle punching at a needle density of 450 needles / cm², or entangled with a water jet at a pressure of 10 MPa three times and dried to form each entangled nonwoven fabric.

After each entangled non-woven fabric was immersed in an epoxy resin bath, it was squeezed between a pair of rolls so that the adhesion amount of epoxy resin was 15 g/m² in solid content, and dried at a temperature of 160°C to produce each filter material.

**[Table 1]**

| | | Fibers (mass%) | | | Mass per unit area (g/m²) | | | Thickness of filter material (mm) |
|---|---|---|---|---|---|---|---|---|
| | | (a) | (b) | (c) | Fibers | Resin | Filter material | |
| Comp. Ex. 1 | Needles | 0 | 70 | 30 | 120 | 15 | 135 | 1.1 |
| Comp. Ex. 2 | Water jet | 0 | 70 | 30 | 120 | 15 | 135 | 1.3 |
| Example 1 | Water jet | 10 | 60 | 30 | 120 | 15 | 135 | 1.1 |
| Example 2 | Water jet | 10 | 20 | 70 | 120 | 15 | 135 | 1.1 |
| Example 3 | Water jet | 10 | 20 | 70 | 160 | 15 | 175 | 1.3 |
| Example 4 | Water jet | 30 | 0 | 70 | 140 | 15 | 155 | 1.1 |
| Example 5 | Water jet | 20 | 50 | 30 | 120 | 15 | 135 | 1.0 |
| Example 6 | Water jet | 25 | 25 | 50 | 120 | 15 | 135 | 0.9 |
| Example 7 | Water jet | 30 | 0 | 70 | 120 | 15 | 135 | 1.0 |
| Ref. Ex. | Water jet | 20 | 50 | 30 | 120 | 0 | 120 | 1.0 |

The thickness of filter material is the value under a load of 2 kPa.

### (3) Physical properties of filter materials;

Physical properties of each filter material are shown in Table 2. Each measurement was carried out by the following methods.

### (Pore size)

The pore size was measured by a mean flow point method using a porometer (Perm Porometer, manufactured by PMI).

### (Air permeability)

The air permeability was measured by 6.8.1 (a Frazier type method) prescribed in JIS L1913 : 2010 "Test methods for nonwovens".

### (Accumulation efficiency)

A tester prescribed in ISO16889 was used to measure the accumulation efficiency under the conditions of a flow rate of 22.7 L / min., an oil volume of 30 L, and a test time of 1 hour. As for the accumulation efficiency, it was judged that the filtration performance was excellent when the concentration decrease rate from the initial dust concentration of 50 mg / L was 60% or more.

### (Pressure loss)

The negative pressure generated at an oil temperature of -20°C and a flow rate of 8 L/min. was measured. It was judged that the pressure loss was low when the pressure loss was 40 kPa or less.

### (Element moldability)

The filter material was processed with a fold machine to judge whether the fold shape could be maintained.

**[Table 2]**

| | Pore size (µm) | Air permeability (mL/cm²/sec) | Amount of dividable composite fibers (g/m²) | Average fineness of fibers other than fine fibers (dtex) | Accumulation efficiency 4µM | Pressure loss (kPa) | Element moldability |
|---|---|---|---|---|---|---|---|
| Comp. Ex. 1 | 40.9 | 110 | 0 | 3.02 | 39% | 9.7 | ○ |
| Comp. Ex. 2 | 39.1 | 94 | 0 | 3.02 | 41% | 12.1 | ○ |
| Example 1 | 33.2 | 72 | 12 | 3.19 | 73% | 15.9 | ○ |
| Example 2 | 36.6 | 88 | 12 | 5.53 | 63% | 12.8 | ○ |
| Example 3 | 41.2 | 69 | 16 | 5.53 | 69% | 15.8 | ○ |
| Example 4 | 18.7 | 34 | 42 | 6.70 | 99% | 38.3 | ○ |
| Example 5 | 21.2 | 40 | 24 | 3.41 | 93% | 32.0 | ○ |
| Example 6 | 18.5 | 40 | 30 | 4.95 | 99% | 31.3 | ○ |
| Example 7 | 22.0 | 40 | 36 | 6.70 | 98% | 30.6 | ○ |
| Ref. Ex. | 23.8 | 43 | 24 | 3.41 | # | # | × |

| | | | | | | | |
|---|---|---|---|---|---|---|---|
| #: Not measured because it could not be molded. | | | | | | | |

### (Results and discussion)

(1) From the comparison between Comparative Example 1 and Comparative Example 2, the filter material obtained by hydroentanglement has a slightly smaller pore size and becomes denser than the filter material obtained by needle punching, but does not reach sufficient filtration efficiency.
(2) From the comparison between Comparative Example 2 and Example 1, when the filter material contains fine fibers, the pore size of the filter material becomes small, and the filtration efficiency of the filter material is excellent.
(3) From the comparison between Example 1 and Example 2, when the amount of thick fibers in the filter material is large, the pore size of the filter material becomes large, and the filtration efficiency of the filter material becomes poor.
(4) From Examples 1 to 7, when the air permeability of the filter material is 30 mL/cm²/sec or more, the pressure loss of the filter material is small. In particular, from the comparison between Example 4 and Example 7, when the air permeability of the filter material is 35 mL/cm²/sec or more, the pressure loss of the filter material becomes smaller.
(5) From the comparison between Example 5 and Referential Example, when the filter material is folded and used, it is preferable to fix fibers with resin.
(6) From the comparison between Example 5 and Example 6, when the amount of dividable composite fibers in the filter material is large, the pore size of the filter material becomes small and the filtration efficiency of the filter material increases.
(7) From Examples 1 to 7, when the pore size of the filter material is 45 µm or less, the filtration efficiency of the filter material is excellent. In particular, from the comparison between Examples 1, 5, and 7, when the pore size of the filter material is 30 µm or less, the filtration efficiency of the filter material is more excellent.

### INDUSTRIAL APPLICABILITY

The filter material of the present invention can be used in the manufacture of an automatic transmission oil filter.

Although the present invention has been described with reference to specific embodiments, various changes and modifications obvious to those skilled in the art are possible without departing from the scope of the appended claims.

## Claims

1. A filter material for an automatic transmission oil filter, said filter material comprising an entangled nonwoven fabric in which fine fibers generated from dividable composite fibers are entangled with each other.

2. The filter material for an automatic transmission oil filter according to claim 1, **characterized in that** the entangled nonwoven fabric comprises fine fibers having a fineness of 0.4 dtex or less, and air permeability is 30 mL/cm²/sec. or more.
